# EUROPÄISCHE PATENTSCHRIFT

(11) **EP 1 307 958 B1**
(45) Veröffentlichungstag und Bekanntmachung des Hinweises auf die Patenterteilung: **15.12.2004**
(21) Anmeldenummer: 99942626.5
(22) Anmeldetag: 13.01.1999
(51) Int. Cl.: H02K 9/26, H02K 9/193

(54) **KÜHLSYSTEM UND VERFAHREN ZUR KÜHLUNG EINES GENERATORS**
COOLING SYSTEM AND METHOD FOR COOLING A GENERATOR
SYSTEME DE REFROIDISSEMENT ET PROCEDE POUR REFROIDIR UN GENERATEUR

(30) Priorität: 26.01.1998 DE 19802801
(43) Veröffentlichungstag der Anmeldung: 07.05.2003
(73) Patentinhaber: SIEMENS AKTIENGESELLSCHAFT, 80333 München (DE)
(72) Erfinder: ADELMANN, Werner, 45468 Mülheim an der Ruhr (DE); BECHER, Kurt, 45470 Mülheim an der Ruhr (DE); EICKELBECK, Uwe, 42555 Velbert (DE); EMSHOFF, Horst-Werner, 45468 Mülheim an der Ruhr (DE); FISCHER, Rainer, 46145 Obehausen (DE); LEHMANN, Christoph, 47506 Neukirchen-Vluyn (DE); SPIEGELHOFF, Karl, 46045 Oberhausen (DE)
(86) Internationale Anmeldenummer: PCT/DE1999/000043
(87) Internationale Veröffentlichungsnummer: WO 1999/038245

(56) Entgegenhaltungen:
- DE-A- 2 222 487
- US-A- 3 835 919
- PATENT ABSTRACTS OF JAPAN vol. 004, no. 181 (E-037), 13. Dezember 1980 & JP 55 125053 A (TOSHIBA CORP), 26. September 1980
- PATENT ABSTRACTS OF JAPAN vol. 009, no. 255 (E-349), 12. Oktober 1985 & JP 60 102838 A (MITSUBISHI DENKI KK), 7. Juni 1985
- PATENT ABSTRACTS OF JAPAN vol. 008, no. 226 (E-272), 17. Oktober 1984 & JP 59 106851 A (FUJI DENKI SEIZO KK), 20. Juni 1984

## Beschreibung

Die Erfindung betrifft ein Kühlsystem zur Kühlung des Stators und/oder des Rotors eines Generators und ein Verfahren zur Kühlung des Stators und/oder des Rotors eines Generators.

In dem Buch "Synchronmaschinen", AEG Telefunken Handbücher, Band 12, Berlin 1970, ist auf Seite 53 ein wasserstoffgekühlter Synchrongenerator mit wassergekühlter Ständerwicklung beschrieben. Bei Generatoren mit wassergekühlter Ständerwicklung ist ein Wasserkreislauf erforderlich. Er besteht aus den Pumpen zum Umwälzen des Primärkühlwassers, aus Rückkühlern und Filtern, die dafür sorgen, daß die Ständerwicklung nicht verschmutzt, sowie einem Ausdehnungsgefäß, das oben auf der Maschine angebracht ist. Im Nebenschluß zu diesem Hauptkreislauf liegen Feinfilter und ein Ionentauscher zur Aufbereitung des Wassers. Da das Kühlwasser der Ständerwicklung über Isolierschläuche zugeführt werden muß, kann über sie ein geringer Anteil Wasserstoff aus dem Maschineninneren in den Wasserkreislauf eindiffundieren. In dem nicht ganz gefüllten Ausdehnungsgefäß wird diesem Wasserstoffanteil Gelegenheit gegeben, aus dem Wasser zu entgasen. Er wird über ein Druckregelventil und eine Gasuhr ins Freie geführt.

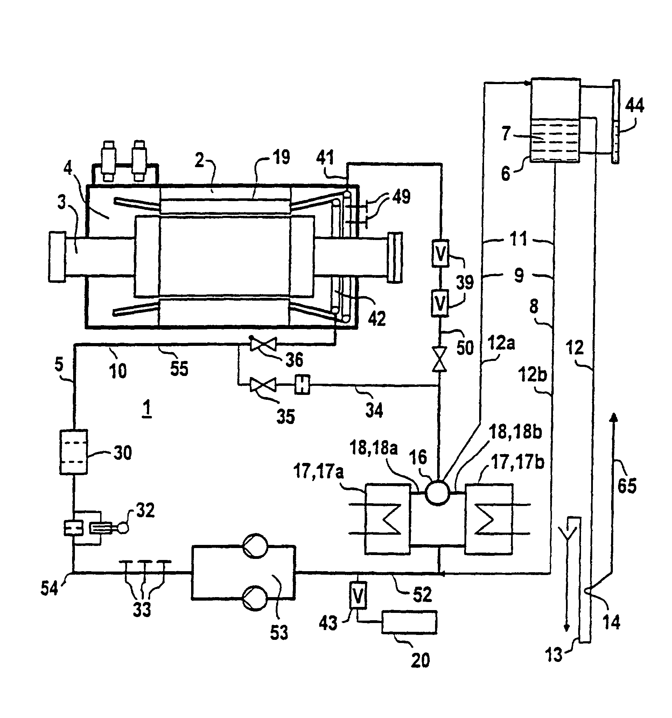

Die DE-AS 22 22 487 zeigt eine Einrichtung zum Entfernen von nicht absorbierten Gasen in Flüssigkeiten bei flüssigkeitsgefüllten elektrischen Maschinen. Gemäß Figuren 1 und 2 werden zwei Konzepte für einen Kühlkreislauf angewendet. Einerseits ist dem Kühlkreislauf ein Kühlmittelausgleichsbehälter über eine Stichleitung zugeschaltet, über den eine Kühlmittelergänzung erfolgt. Bei dieser Anordnung des Ausgleichsbehälters außerhalb des Kühlkreislaufs ist ein Entgasungsbehälter in den Kühlkreislauf geschaltet, der vom gesamten Kühlmittelstrom durchströmt wird. In dem Entgasungsbehälter kommt es zu einer Ausgasung des Kühlmittels. Die Gase werden ins Freie abgeführt. Bei dem anderen Konzept ist der Ausgleichsbehälter für das Kühlmittel in einen parallel zum Hauptkühlkreislauf geschalteten Nebenkreislauf integriert. Hierbei wird der Ausgleichsbehälter kontinuierlich von einem kleineren Kühlmittelstrom des Nebenkreislaufs durchströmt und dient gleichzeitig als Entgasungsbehälter.

In der Siemens-Zeitschrift Bd. 41, 1967, Heft 10, Seite 838 bis 839 ist anhand von Bild 5 ein Kühlwasserkreis für eine wassergekühlte elektrische Maschine erläutert. Das Kühlwasser muß aus Isolationsgründen eine niedrige elektrische Leitfähigkeit haben. Aus diesem Grunde sind chemische Filter oder Ionenaustauscher in den Kühlkreislauf geschaltet, die kontinuierlich die Ionenkonzentration im Kühlwasser reduzieren.

Die DE 22 07 342 offenbart eine Einrichtung zur Kühlung elektrischer Maschinen, insbesondere Turbogeneratoren, mit wassergekühlter Ständer- und Läuferwicklung. Die Kühleinrichtung besteht aus einem auf das Läuferwellenende aufgesetzten Kühlwasseranschlusskopf mit einer Schaftpumpe sowie Kühlwassereintritts- und Austrittskammer und einem externen, im Kreislauf zwischen die Kühlwasserkammern eingeschalteten, und von einem Gaspolster erhöhtem Druckes beaufschlagten Wasserbehälter. Zwischen einer der Kühlwasseraustrittskammer benachbarten druckreduzierenden Wasserkammer und dem unter erhöhtem Druck stehenden Wasserbehälter ist ein Zwischenbehälter eingeschaltet, dessen Gaspolster auf einem geringfügig höheren Druck als dem Athmosphärendruck gehalten ist und dass die im Zwischenbehälter anfallende Wassermenge durch eine Druckerhöhungspumpe in den Hauptwasserbehälter zurückspeisbar ist.

Aufgabe der Erfindung ist es, ein einfaches und kostengünstiges Kühlsystem zur Kühlung des Stators und/oder des Rotors eines Generators bereitzustellen. Weitere Aufgabe der Erfindung ist es, ein Verfahren zur Kühlung des Stators und/oder des Rotors eines Generators anzugeben.

Erfindungsgemäß wird die auf ein Kühlsystem gerichtete Aufgabe gelöst durch ein Kühlsystem zur Kühlung des Stators und/oder des Rotors eines Generators, mit einem Kühlkreislauf und mit einem Ausgleichbehälter für ein den Kühlkreislauf durchströmendes Kühlmittel, wobei der Ausgleichbehälter außerhalb des Kühlkreislaufs angeordnet und mit dem Kühlkreislauf durch eine Leitung verbunden ist und wobei der Ausgleichsbehälter in eine zum Kühlkreislauf parallel geschaltete Parallelstrecke integriert ist. Im Kühlkreislauf ist ein Kühler mit einem Kühlmitteleingang integriert, wobei dem Kühlmitteleingang eine Beruhigungsstrecke vorgeschaltet ist, die einer Entgasung und Beruhigung des Kühlmittels dient.

Häufig wurde bei wassergekühlten Generatoren, wie oben ausgeführt, ein Ausgleichsbehälter so angeordnet, daß diesen das gesamte Kühlmittel durchströmt. Dies erfordert einen sehr groß dimensionierten Ausgleichsbehälter. Ein solcher Ausgleichsbehälter ist ein erheblicher Kostenfaktor. Bei der vorliegenden Ausführung wird der Ausgleichsbehälter aus dem Kühlkreislauf herausgenommen und in eine Parallelstrecke zum Kühlkreislauf integriert. Damit wird der Ausgleichsbehälter von in der Parallelstrecke strömenden Kühlmittel kontinuierlich durchströmt. Dies bietet insbesondere den Vorteil, daß das Kühlmittel im Ausgleichsbehälter nicht absteht. Durch Abstehen des Kühlmittels wird dieses mit der Zeit leitfähiger, was zu Isolationsproblemen führen kann. Bei einem kontinuierlichen Durchströmen werden durch Abstehen hervorrufbare Isolationsprobleme vermieden.

Der Erfindung liegt die Erkenntnis zugrunde, daß es bei einer Parallelschaltung des Ausgleichsbehälters nur zu einer unvollständigen Entgasung des Kühlmittels kommt, da nur ein kleiner Teil des Kühlmittels durch den Ausgleichsbehälter strömt und dort entgasen kann. Um eine weitgehende Entgasung sichzustellen, wird im Kühlkreislauf eine Beruhigungsstrecke angeordnet. Eine solche Beruhigungsstrecke kann z.B. einfach eine dem Kühlkreislauf parallel geschaltete Leitung sein. In einer solchen Beruhigungsstrecke strömt das Kühlmittel langsamer und kann entgasen. Vorzugsweise zweigt die Parallelstrecke, in der der Ausgleichsbehälter angeordnet ist, von dieser Beruhigungsstrecke ab. Diese wird vom Hauptstrom des Kühlmittels durchströmt, so daß eine effektive Entgasung des Kühlmittels erreicht wird. Vorzugsweise sind zwei Kühler vorgesehen, deren Kühlmitteleingänge durch die Beruhigungsstrecke verbunden sind. Diese Ausgestaltung zeigt eine besonders geeignete Anordnung der Beruhigungsstrecke auf.

Bevorzugt faßt der Ausgleichsbehälter zwischen 50 und 800 1, insbesondere zwischen 100 und 300 1. Weiter bevorzugt ist durch den Kühlkreislauf ein primärer Kühlmittelstrom und durch die Parallelstrecke ein sekundärer Kühlmittelstrom führbar, wobei der primäre Kühlmittelstrom um den Faktor 10 bis 100, insbesondere um einen Faktor 50 bis 200, größer ist als der sekundäre Kühlmittelstrom. Bevorzugt beträgt der primäre Kühlmittelstrom zwischen 10 und 100 m³/h, insbesondere zwischen 20 und 40 m³/h. Bevorzugtermaßen trägt der sekundäre Kühlmittelstrom zwischen 10 und 500 l/h, insbesondere zwischen 100 und 250 l/h.

Bevorzugt ist der Ausgleichsbehälter mit einer Abgabeleitung verbunden, welche der Abgabe von überschüssigem Kühlmittel aus dem Kühlkreislauf dient. Somit kann überschüssiges Kühlmittel in einfacher Weise über eine Abgabeleitung abgegeben werden, während bisher ein Überdruckventil vorgesehen werden mußte.

Weiter bevorzugt weist die Abgabeleitung eine U-förmige Krümmung auf, in deren Bereich eine Gasauslaßöffnung so angeordnet ist, daß bei Überschreiten eines Grenz-Gasdruckes im Ausgleichsbehälter Gas aus dem Ausgleichsbehälter über die Gasauslaßöffnung abgebbar ist. Somit kann ein Überdruckventil entfallen. Vorzugsweise kann über ein Schauglas der Kühlmittellevel kontrolliert werden.

Bevorzugtermaßen ist der Ausgleichsbehälter getrennt vom Generator positioniert. Der Ausgleichsbehälter bildet somit keine Baueinheit mit dem Generator. Eine solche Ausführungsform ist durch den kleiner dimensionierten, außerhalb des Kühlkreislaufs angeordneten Ausgleichsbehälter möglich. Insbesondere ergibt sich dadurch der Vorteil, daß für den Ausgleichsbehälter keine aufwendige Schwingungsdämpfung vorgesehen werden muß. Eine solche Schwingungsdämpfung wird erforderlich, wenn der Ausgleichsbehälter wie bisher eine Baueinheit mit dem Generator bildet, also z.B. auf dem Generator angeordnet ist. Damit ist der Ausgleichsbehälter den Schwingungen ausgesetzt, die vom Generator während des Betriebs hervorgerufen werden.

Weiter bevorzugt ist im Kühlkreislauf die Beruhigungsstrecke unmittelbar dem Kühlmitteleingang vorgeschaltet.

Bevorzugtermaßen sind im Stator oxidationsbeständige Kühlkanäle für das Kühlmittel vorgesehen. Durch solche oxidationsbeständigen Kühlkanäle, z.B. Kühlkanäle aus Edelstahl, sind folgende Vorteile erzielbar:
a) Die Grenzen des Sauerstoffgehaltes des Kühlmittels können großzügig gestaltet werden.
b) Von einer Stickstoffspülung zur Minimierung des Sauerstoffgehalts des Kühlmittels kann abgesehen werden.
c) Die Höhe des pH-Wertes ist von untergeordneter Bedeutung.
d) Ein Ionenaustauscher kann entfallen.
e) Der erhebliche Zeitaufwand zur Konditionierung des Wassers während einer Inbetriebsetzung des Generators entfällt.

Weiter bevorzugt sind Mittel für eine Kühlmittelzufuhr zur Frischung des durch den Kühlkreislauf strömenden Kühlmittels vorgesehen. Eine solche Frischung dient dazu, das sich mit der Zeit an Ionen anreichernde Kühlmittel durch neues Kühlmittel geringer Leitfähigkeit zu ersetzen. Eine solche geringe Leitfähigkeit wird für eine gute Isolation angestrebt. Insbesondere bei oxidationsbeständigen Kanälen des Kühlsystems im Stator oder im Rotor kann dem Kühlkreislauf in einfacher Weise neues Kühlmittel zugeführt werden, da im Gegensatz zu Kühlkanälen aus z.B. Kupfer kein streng geschlossener Kühlkreislauf eingehalten werden muß.

Bevorzugt wird das Kühlsystem zur Kühlung des Stators eines wassergekühlten Turbogenerators, insbesondere eines Turbogenerators mit einer Leistung zwischen 500 und 1300 MVA verwendet.

Erfindungsgemäß wird die auf ein Verfahren gerichtete Aufgabe gelöst durch ein Verfahren zur Kühlung des Stators und/oder des Rotors eines Generators, bei dem ein Kühlmittel durch die Stator- und/oder die Rotorwicklung und durch einen Kühler geführt wird, wobei das Volumen an Kühlmittel durch ein Reservoir etwa konstant gehalten und dieses Reservoir nicht vom gesamten Kühlmittel durchströmt wird, wobei das Kühlmittel in einer dem Kühler vorgeschalteten Beruhigungsstrecke, entgast und beruhigt wird.

Die Vorteile eines solchen Verfahrens ergeben sich entsprechend den obigen Ausführungen zu den Vorteilen des Kühlsystems.

Die Erfindung wird beispielhaft anhand der Zeichnung in einem Ausführungsbeispiel näher erläutert.

Die einzige Figur zeigt die schematische Darstellung eines Kühlsystems für den Stator eines Generators.

In der Figur ist schematisch und nicht maßstäblich ein Kühlsystem 1 für einen Turbogenerator 4 dargestellt. Der Turbogenerator 4 umfaßt einen Rotor 3 und einen den Rotor 3 umgebenden Stator 2. Der Stator 2 weist eine hier nicht näher dargestellte elektrische Wicklung auf, die aus einer Vielzahl von elektrischen Leitern besteht. Durch diese elektrische Wicklung führen Kühlkanäle 19 aus Edelstahl, von denen ein Kühlkanal 19 schematisch angedeutet ist. Diese Kühlkanäle 19 sind in einen Kühlkreislauf 5 integriert. In dem Kühlkreislauf 5 fließt Kühlmittel 7, hier Wasser. Die Kühlkanäle 19 sind mit einem Warmwassersammelrohr 41 verbunden. Vom Warmwassersammelrohr 41 führt eine Leitung 50 zu zwei parallel geschalteten Kühlern 17. In die Leitung 50 ist eine Volumenstrommeßeinrichtung 39 integriert. Die Temperatur im Warmwassersammelrohr 41 wird über eine Temperaturmeßeinrichtung 49 bestimmt. Der erste Kühler 17a weist einen Kühlmitteleingang 18a auf. Der zweite Kühler 17b weist einen Kühlmitteleingang 18b auf. Den Kühlmitteleingängen 18a und 18b ist eine Beruhigungsstrecke 16 parallel geschaltet. Von den Kühlern 17a und 17b führt eine Leitung 52 zu einer Pumpeinheit 53. In die Leitung 52 mündet eine Frischung 20, welche durch ein Ventil 43 zu- und abschaltbar ist. Von der Pumpeinheit 53 führt eine Leitung 54 zu einem Filter 30. Der Filter 30 dient zur Ausfilterung von Schmutzpartikeln. In die Leitung 54 ist weiterhin eine Leitfähigkeitsmeßeinrichtung 32 sowie eine Temperaturmeßeinrichtung 33 eingebaut. Vom Filter 30 führt eine Leitung 55 zu einem Kaltwassersammelrohr 42. Das Kaltwassersammelrohr 42 ist wiederum mit den Kühlkanälen 19 verbunden.

Von der Beruhigungsstrecke 16 zweigt eine Leitung 12a ab, welche zu einem Ausgleichsbehälter 6 führt. Von dem Ausgleichsbehälter 6 führt eine Leitung 12b zur Leitung 52 strömungstechnisch hinter den Kühlern 17. Vom Ausgleichsbehälter 6 weg führt eine Abgabeleitung 12. Diese weist eine U-förmige Krümmung 13 auf. Über eine Gasauslaßöffnung 14 im Bereich der U-förmigen Krümmung 13 läßt sich Gas ablassen, wenn sein Gasdruck im Ausgleichsbehälter 6 so groß wird, daß Kühlmittel 7 unter die Gasauslaßöffnung 14 gedrückt wird. Weiterhin ist am Ausgleichsbehälter 6 eine Füllstandsanzeige 44 vorgesehen.

Der Kühlkreislauf 5 zur Kühlung des Stators 2 wird gebildet durch
a) die Kühlkanäle 19 im Stator 2,
b) das Warmwassersammelrohr 41,
v) die Leitung 50
d) die Beruhigungsstrecke 16 und die Kühler 17
e) die Leitung 52
f) die Leitung 54
g) die Leitung 55 und
h) das Kaltwassersammelrohr 42.

Weiterhin umfaßt der Kühlkreislauf 5 die in ihn integrierten Meß- und Betriebsgeräte, z.B. die Pumpeinheit 53 oder den Filter 30.

Es ist weiterhin eine Bypassleitung 60 vorgesehen, die zum Generator 4 parallel geschaltet ist. Sie kann über ein Ventil 61 zu- oder abgeschaltet werden. Ein Ventil 62 schließt oder öffnet die Leitung 55 zum Generator 4. Die Bypassleitung dient unter anderem zum Schutz der Pumpeinheit 53 beim Anfahren des Kühlsystems 1.

Dem Kühlkreislauf 5 ist eine Parallelstrecke 9 parallel geschaltet, welche
a) die Leitung 12a,
b) den Ausgleichsbehälter 6 und
c) die Leitung 12b umfaßt.

Ein wesentlicher Vorteil des Kühlsystems 1 ist, daß der Ausgleichsbehälter 6 außerhalb des Kühlkreislaufs 5 angeordnet ist. Durch den Ausgleichsbehälter 6 wird nur ein relativ kleiner sekundärer Kühlmittelstrom 11 über die Parallelstrecke 9 geführt. Damit kann der Ausgleichsbehälter 6 verhältnismäßig klein ausgeführt werden. Vorzugsweise umfaßt der Ausgleichsbehälter 6 zwischen 50 und 800 l, insbesondere zwischen 100 und 300 l. Der sekundäre Kühlmittelstrom 11 ist dabei z.B. um einen Faktor 50 bis 200 kleiner als ein primärer Kühlmittelstrom 10, welcher im Kühlkreislauf 5 geführt wird. Die kleine Ausführung des Ausgleichsbehälters 6 ist besonders kostengünstig. Zudem bildet der Ausgleichsbehälter 6 keine Baueinheit mit dem Generator 4. Damit kann er erstens ohne eine Schwingungsdämpfung ausgeführt werden und zweitens an einem beliebigen, besonders geeigneten Ort aufgestellt werden.

Ein weiterer Vorteil des Kühlsystems 1 liegt darin, daß den Kühlern 17 eine Beruhigungsstrecke 16 vorgeschaltet ist. In dieser Beruhigungsstrecke 16 strömt das Wasser langsamer und kann entgasen. Das Gas wird über die Leitung 12a dem Ausgleichsbehälter 6 zugeführt. Von diesem kann es z.B. einfach über Dach abgelassen werden. Für den Ausgleichsbehälter 6 entfällt weiterhin ein Überdruckventil. Der Überdruckausgleich erfolgt über die Abgabeleitung 12.

Insbesondere für Generatoren mit oxidationsbeständigen Kühlkanälen 19 ist das gezeigte Kühlsystem 1 verwendbar.

Die einzelnen Komponenten werden im folgenden noch näher beschrieben.

### 1. Verrohrung des Generators

Kaltwasser wird dem Generator über einen nicht dargestellten Feinstfilter, welcher am Generatoreintritt angeordnet ist, zugeführt und in das Kaltwassersammelrohr 42 in senkrechter Mitte unten eingespeist. Das vom Generator 4 erwärmte Warmwasser wird dem Warmwassersammelrohr 41 in senkrechter Mitte oben entnommen und außerhalb des Generators 4 nach unten zu den Kühlern 17 geführt. Diese Einbindung sichert während des Betriebes die selbständige Entlüftung von Sammelrohren und Streben. Im Zulauf, unmittelbar vor dem Generator, und im Rücklauf sind Absperrventile 60, 61 angeordnet, die einen Spülbetrieb über die Bypassleitung 60 zulassen, ohne daß die Kühlkanäle 19 dabei mit Wasser vollaufen oder ungewollt benetzt werden. Der Volumenstrom in der Bypassleitung 60 wird durch geeignete Maßnahmen auf den Nennvolumenstrom der Pumpeinheit 53 begrenzt.

### 2. Pumpen

Zur Umwälzung des Wasserkreislaufs stehen zwei Kreiselpumpen 53a, 53b gleicher Leistung zur Verfügung. Jede Pumpe 53a, 53b kann als Betriebspumpe oder Stand-by-Pumpe ausgewählt werden. Die Stand-by-Pumpe wird automatisch zugeschaltet, sobald die Betriebspumpe ausfällt. Für den Antrieb der Pumpen 53a, 53b sind Drehstrommotoren vorgesehen, die aus verschiedenen Netzen gespeist werden.

### 3. Filter

Das eingefüllte und umgewälzte Wasser muß weitgehend frei von Schwebestoffen sein, die sich ablagern und Strömungsbehinderungen aufbauen können. Das Wasser des primären Kühlmittelstroms 10 muß daher zum Filter 30 mit angemessener Filterfeinheit geleitet werden. Eine Umgehung ist nicht erforderlich. Der Verschmutzungsgrad ist über eine Druckdifferenzmessung erfaßbar. Standardmäßig ist ein Druckdifferenzmesser mit binärem Grenzwertgeber vorgesehen.

### 4. Kühler

Die Kühler 17 dienen der Rückkühlung des Primärwasserstroms 10. Standardmäßig sind zwei Kühler 17a, 17b vorgesehen, von denen jeder Kühler 17a, 17b 50% der Kühlleistung übernimmt. Als Kühler 17 werden Plattenkühler in gelöteter Ausführung eingesetzt. Alle benetzten Oberflächen bestehen aus nicht-rostendem Stahl. Eine Umgehung ist primärwasserseitig für die Kühler 17 nicht vorgesehen. Für den Störfall übernimmt daher ein Kühler 17 den vollen Primärwasservolumenstrom. Der durch den Anstieg der Druckdifferenz bewirkte Rückgang des Volumenstroms führt dabei nicht zur Schutzauslösung. An den primärseitigen Kühlmitteleingängen 18a, 18b der Kühler 17 befindet sich ein Parallelschaltrohr, die Beruhigungsstrecke 16, welches als Bläschenseparator dient. Es sorgt dafür, daß die Strömung beruhigt wird und Gasblasen ausfallen können. Der Querschnitt der Beruhigungsstrecke 16 ist für diese Zusatzaufgabe bemessen. Über die Leitung 12a fließt ständig eine kleine Kühlerbypassmenge zum Ausgleichsbehälter 6. Mit diesem sekundären Kühlmittelstrom werden ausgefallene Blasen aus der Beruhigungsstrecke 16 in den Ausgleichsbehälter 6 getragen.

### 5. Ausgleichsbehälter

Der Ausgleichsbehälter 6 ist über Stichleitungen 12a, 12b an den Kühlkreis 5 gebunden. Er fängt die thermisch bedingte Volumenänderung des Wassers ab, leitet überschüssiges Wasser ab und dient als Entlüftungs- und Entgasungstank. Beim Auffüllen der Kühlkanäle 19 während der Inbetriebsetzung deckt er vorübergehend den zusätzlich benötigten Wasserbedarf. Der Ausgleichsbehälter 6 wird mit einem geringen Volumenstrom zwangsdurchströmt. Dieser Volumenstromm trägt Gasblasen des Kühlkreislaufs 5 in den Ausgleichsbehälter 6. Der Füllstand des Ausgleichsbehälters 6 ist von außen erkennbar und die Unterschreitung des Mindestfüllstands wird durch Warnung zur Kenntnis gebracht. Die Entwässerung und Entgasung ist über eine Wasservorlage so kombiniert, daß Wasser drucklos abfließen kann, Gas bei Überdruck im Ausgleichsbehälter 6 aber in eine Auspuffleitung 65 abgeleitet wird. Die Wasservorlage wird durch das Wasser der Frischung 20 dauernd erneuert. Eine Wartung und Überwachung der Wasserfüllung ist nicht erforderlich. Durch Diffusion und Mini-Leckagen dringt bei einem wasserstoffgekühlten Generator Wasserstoff in das Wasser ein. Im Ausgleichsbehälter 6 baut sich ein Überdruck auf, der die Wassersäule im Druckschenkel der U-förmigen Krümmung bis in die Höhe der Gasauslaßöffnung 14 für die Auspuffleitung 65 niederdrückt. Weiterhin eintretender Wasserstoff wird über die Abgabeleitung 12 in die Auspuffleitung 65 geführt und verursacht keinen zusätzlichen Druckanstieg. Ein Stickstoffanstieg am Bläschenseparator, der Beruhigungsstrecke, gibt die Möglichkeit, den Ausgleichsbehälter 6 mit Inertgas zu spülen.

### 6. Kühlmittelzufuhr

Das zur Frischung eingespeiste Wasser wird einem Deionatnetz mit geringer Leitfähigkeit entnommen. Das Wasser wird vor den Pumpen 53a, 53b eingespeist und vor der Einspeisung über ein Feinfilter geleitet. Der Volumenstrom wird von Hand mit einem Regelventil eingestellt und lokal angezeigt. Eine Rückflußsperre verhindert Primärwasserverlust, wenn das Deionatnetz drucklos ist.

## Patentansprüche

1. Kühlsystem (1) zur Kühlung des Stators (2) und/oder des Rotors (3) eines Generators (4), mit einem Kühlkreislauf (5) und mit einem Ausgleichsbehälter (6) für ein den Kühlkreislauf (5) durchströmendes Kühlmittel (7), wobei der Ausgleichsbehälter (6) außerhalb des Kühlkreislaufes (5) angeordnet und in eine zum Kühlkreislauf (5) parallel geschaltete Parallelstrecke (9) integriert ist,
**dadurch gekennzeichnet, daß** im Kühlkreislauf (5) ein Kühler (17) mit einem Kühlmitteleingang (18) integriert ist, wobei dem Kühlmitteleingang (18) eine Beruhigungsstrecke (16) vorgeschaltet ist, die einer Entgasung und Beruhigung des Kühlmittels (7) dient.

2. Kühlsystem (1) nach Anspruch 1, ,
**dadurch gekennzeichnet, daß** der Ausgleichsbehälter (6) zwischen 50 und 800 Liter, insbesondere zwischen 100 und 300 Liter, faßt.

3. Kühlsystem (1) nach Anspruch 1 oder 2,
**dadurch gekennzeichnet, daß** durch den Kühlkreislauf (5) ein primärer Kühlmittelstrom (10) und durch die Parallelstrecke ein sekundärer Kühlmittelstrom (11) führbar ist, wobei der primäre Kühlmittelstrom (10) um den Faktor 10 bis 1000, insbesondere um einen Faktor 50 bis 200, größer ist als der sekundäre Kühlmittelstrom (11).

4. Kühlsystem (1) nach Anspruch 3,
**dadurch gekennzeichnet, daß** der primäre Kühlmittelstrom (10) zwischen 10 und 100 m³/h , insbesondere zwischen 20 und 40 m³/h beträgt.

5. Kühlsystem (1) nach Anspruch 3 oder 4,
**dadurch gekennzeichnet, daß** der sekundäre Kühlmittelstrom (11) zwischen 10 und 500 l/h , insbesondere zwischen 100 und 250 l/h beträgt.

6. Kühlsystem (1) nach einem der vorhergehenden Ansprüche, **dadurch gekennzeichnet, daß** der Ausgleichsbehälter (6) mit einer Abgabeleitung (12) verbunden ist, welche der Abgabe von überschüssigem Kühlmittel (7) aus dem Kühlkreislauf (5) dient.

7. Kühlsystem (1) nach Anspruch 6,
**dadurch gekennzeichnet, daß** die Abgabeleitung (12) eine U-förmige Krümmung (13) aufweist, wobei eine Gasauslaßöffnung (14) im Bereich der U-förmigen Krümmung (13) so angeordnet ist, daß bei Überschreiten eines Grenz-Gasdrucks im Ausgleichsbehälter(6) Gas aus dem Ausgleichsbehälter (6) über die Gasauslaßöffnung (14) ablaßbar ist.

8. Kühlsystem (1) nach einem der vorhergehenden Ansprüche, **dadurch gekennzeichnet, daß** der Ausgleichsbehälter (6) getrennt vom Generator (4) positioniert ist.

9. Kühlsystem (1) nach einem der vorhergehenden Ansprüche, **dadurch gekennzeichnet, daß** die Beruhigungsstrecke (16) unmittelbar dem Kühlmitteleingang (18) vorgeschaltet ist.

10. Kühlsystem (1) nach Anspruch 9,
**dadurch gekennzeichnet, daß** zwei Kühler (17a, 17b) vorgesehen sind, deren Kühlmitteleingänge (18a, 18b) durch die Beruhigungsstrecke (16) verbunden sind.

11. Kühlsystem (1) nach einem der vorhergehenden Ansprüche, **dadurch gekennzeichnet, daß** im Stator (2) oxidationsbeständige Kanäle (19) für das Kühlmittel (7) vorgesehen sind.

12. Kühlsystem (1) nach einem der vorhergehenden Ansprüche, **dadurch gekennzeichnet, daß** Mittel (20) für eine Kühlmittelzufuhr zur Ergänzung des im Kühlkreislauf (5) strömenden Kühlmittels (7) vorgesehen sind.

13. Verwendung eines Kühlsystems (1) nach einem der vorhergehenden Ansprüche zur Kühlung des Stators (2) eines wassergekühlten Turbogenerators (4), insbesondere eines Turboenerators (4) mit einer Leistung zwischen 500 und 1300 MVA.

14. Verfahren zur Kühlung des Stators (2) eines Generators (4), bei dem ein Kühlmittel (7) durch die Statorwicklung und durch einen Kühler (17) geführt wird, wobei die Menge an Kühlmittel (7) durch ein Reservoir (6) etwa konstant gehalten wird und wobei dieses Reservoir (6) nicht vom gesamten Kühlmittel (7) durchströmt wird,
**dadurch gekennzeichnet, daß** das Kühlmittel (7) in einer dem Kühler (17) vorgeschalteten Beruhigungsstrecke (16) entgast und beruhigt wird.

## Claims

1. Cooling system (1) for cooling the stator (2) and/or the rotor (3) of a generator (4), having a cooling circuit (5) and having a compensating container (6) for a coolant (7) flowing through the cooling circuit (5), the compensating container (6) being arranged outside the cooling circuit (5) and being integrated into a parallel section (9) connected in parallel with the cooling circuit (5), **characterized in that** a cooler (17) with a coolant inlet (18) is integrated in the cooling circuit (5), a calming section (16) being connected upstream of the coolant inlet (18), said calming section serving for degassing and calming the coolant (7).

2. Cooling system (1) according to Claim 1, **characterized in that** the compensating container (6) holds between 50 and 800 litres, in particular between 100 and 300 litres.

3. Cooling system (1) according to Claim 1 or 2, **characterized in** a primary coolant flow (10) can be guided through the cooling circuit (5), and a secondary coolant flow (11) can be guided through the parallel section, the primary coolant flow (10) being larger by a factor of 10 to 1000, in particular by a factor of 50 to 200, than the secondary coolant flow (11).

4. Cooling system (1) according to Claim 3, **characterized in that** the primary coolant flow (10) is between 10 and 100 m³/h, in particular between 20 and 40 m³/h.

5. Cooling system (1) according to Claim 3 or 4, **characterized in that** the secondary coolant flow (11) is between 10 and 500 l/h, in particular between 100 and 250 l/h.

6. Cooling system (1) according to one of the preceding claims, **characterized in that** the compensating container (6) is connected to a discharge line (12) which serves to discharge surplus coolant (7) from the cooling circuit (5). line (12) which serves to discharge surplus coolant (7) from the cooling circuit (5).

7. Cooling system (1) according to Claim 6, **characterized in that** the discharge line (12) has a U-shaped bend (13), a gas outlet opening (14) being arranged in the region of the U-shaped bend (13) such that upon overshooting of a limiting gas pressure in the compensating container (6) gas can be discharged from the compensating container (6) via the gas outlet opening (14).

8. Cooling system (1) according to one of the preceding claims, **characterized in that** the compensating container (6) is positioned separately from the generator (4).

9. Cooling system (1) according to one of the preceding claims, **characterized in that** the calming section (16) is connected directly upstream of the coolant inlet (18).

10. Cooling system (1) according to Claim 9, **characterized in that** two coolers (17a, 17b) are provided whose coolant inlets (18a, 18b) are connected by means of the calming section (16).

11. Cooling system (1) according to one of the preceding claims, **characterized in that** oxidation-resistant channels (19) for the coolant (7) are provided in the stator (2).

12. Cooling system (1) according to one of the preceding claims, **characterized in that** provision is made of means (20) for supplying coolant for supplementing the coolant (7) flowing in the cooling circuit (5).

13. Use of a cooling system (1) according to one of the preceding claims for cooling the stator (2) of a water-cooled turbo-driven generator (4), in particular a turbo-driven generator (4) with a power of between 500 and 1300 MVA.

14. Method for cooling the stator (2) of a generator (4), in the case of which a coolant (7) is guided through the stator winding and through a cooler (17), the quantity of coolant (7) being kept approximately constant by a reservoir (6), and not all of the coolant (7) flowing through this reservoir (6), **characterized in that** the coolant (7) is degassed and calmed in a calming section (16) connected upstream of the cooler (17).

## Revendications

1. Système (1) de refroidissement du stator (2) et/ou du rotor (3) d'une génératrice (4) comprenant un circuit (5) de refroidissement et une cuve (6) de compensation pour un fluide (7) de refroidissement passant dans le circuit (5) de refroidissement, la cuve (6) de compensation étant placée à l'extérieur du circuit (5) de refroidissement et est intégrée dans une section (9) parallèle montée en parallèle avec le circuit (5) de refroidissement,
**caractérisé en ce qu'**il est intégré au circuit (5) de refroidissement un dispositif (17) de refroidissement ayant une entrée (18) pour du fluide de refroidissement, une section (16) de tranquillisation, qui sert à obtenir un dégazage et une tranquillisation du fluide (7) de refroidissement, étant montée en amont de l'entrée (18) pour du fluide de refroidissement.

2. Système (1) de refroidissement suivant la revendication 1, **caractérisé en ce que** la cuve (6) de compensation a une contenance comprise entre 50 et 800 litres, notamment comprise entre 100 et 300 litres.

3. Système (1 ) de refroidissement suivant la revendication 1 ou 2, **caractérisé en ce qu'**il peut passer dans le circuit (5) de refroidissement un courant (10) primaire de fluide de refroidissement et dans la section parallèle un courant (11) secondaire de fluide de refroidissement, le courant (10) primaire de fluide de refroidissement étant plus grand du facteur 10 à 1 000, notamment d'un facteur de 50 à 200, que le courant (11) secondaire du fluide de refroidissement.

4. Système (1) de refroidissement suivant la revendication 3, **caractérisé en ce que** le courant (10) primaire du fluide de refroidissement est compris entre 10 et 100 m³/h, notamment compris entre 20 et 40 m³/h.

5. Système (1) de refroidissement suivant la revendication 3 ou 4, **caractérisé en ce que** le courant (11) secondaire du fluide de refroidissement est compris entre 10 et 500 l/h, notamment compris entre 100 et 250 l/h.

6. Système (1) de refroidissement suivant l'une des revendications précédentes, **caractérisé en ce que** la cuve (6) de compensation communique avec un conduit (12) d'évacuation qui sert à évacuer le fluide (7) de refroidissement en excès du circuit (5) de refroidissement.

7. Système (1) de refroidissement suivant la revendication 6, **caractérisé en ce que** le conduit (12) d'évacuation a une courbure (13) en forme de U, une ouverture (14) d'échappement des gaz étant disposée dans la zone de la courbure (13) en forme de U de façon à ce que, si une pression limite des gaz est dépassée dans la cuve (6) de compensation, du gaz peut s'échapper de la cuve (6) de compensation par l'ouverture (14) d'échappement des gaz.

8. Système (1) de refroidissement suivant l'une des revendications précédentes, **caractérisé en ce que** la cuve (6) de compensation est mise en une position séparée de la génératrice (4).

9. Système (1) de refroidissement suivant l'une des revendications précédentes, **caractérisé en ce que** la section (16) de tranquillisation est montée directement en amont de l'entrée (18) pour du fluide de refroidissement.

10. Système (1) de refroidissement suivant la revendication 9, **caractérisé en ce qu'**il est prévu deux dispositifs (17a, 17b) de refroidissement, dont les entrées (18a, 18b) pour du fluide de refroidissement communiquent par la section (16) de tranquillisation.

11. Système (1 ) de refroidissement suivant l'une des revendications précédentes, **caractérisé en ce qu'**il est prévu dans le stator (2) des canaux (19) pour le fluide (7) de refroidissement, qui résistent à l'oxydation.

12. Système (1) de refroidissement suivant l'une des revendications précédentes, **caractérisé en ce qu'**il est prévu des moyens (20) pour un apport de fluide de refroidissement afin de compléter le fluide (7) de refroidissement passant dans le circuit (5) de refroidissement.

13. Utilisation d'un système (1) de refroidissement suivant l'une des revendications précédentes pour le refroidissement du stator (2) d'un turboalternateur (4) à refroidissement par de l'eau, notamment d'un turboalternateur (4) d'une puissance comprise entre 500 et 1 300 MVA.

14. Procédé de refroidissement du stator (2) d'une génératrice (4), dans lequel on fait passer un fluide (7) de refroidissement dans l'enroulement du stator et dans un dispositif (17) de refroidissement, la quantité de fluide (7) de refroidissement étant maintenue à peu près constante dans un réservoir (6) et tout le fluide (7) de refroidissement ne passant pas dans ce réservoir (6),
**caractérisé en ce que** l'on dégaze et l'on tranquillise le fluide (7) de refroidissement dans une section (7) de tranquillisation en amont du dispositif (17) de refroidissement.
